# EUROPEAN PATENT APPLICATION

(11) **EP 1 136 839 A1**
(43) Date of publication of application: **26.09.2001**
(21) Application number: 00201082.5
(22) Date of filing: 24.03.2000
(51) Int. Cl.: G01S 7/00, G01S 13/86

(54) **System and method for transfer of radar information**

(71) Applicant: Terma Elektronik A/S, 8520 Lystrup (DK)
(72) Inventor: Buus, Niels, Tilst, 8381 Mundelstrup (DK); Johansen, Knud, 8680 Ry (DK); Bruun, Poul, 8520 Lystrup (DK)
(74) Representative: Elmeros, Claus

(57) **Abstract**

The invention relates to a radar information transfer system comprising transmission means (T) for wireless transmission of radar information (RI), mobile receiving means (MR) for receipt of said radar information (RI), central control means (CCM) for controlling transmission and receipt of radar information, said radar information (RI; 11, 12, 13, 14, 15) comprising parameterized objects (21, 22, 23, 24, 25) deduced on the basis of a radar measurements (RM) and at least one of said objects comprising at least two object parameters (OP), said object parameters comprising an object position (OPOS) and object velocity (OVEL).

According to the invention, it is possible to obtain an advantageous combination of transferring high definition radar measurement while also occupying a very low transmission bandwidth. Accordingly, standard naval VHF radio equipment may be applied for transmission of radar information.

## Description

### Field of the invention

The invention relates to a radar information transfer system according to claim 1, a method of transferring radar information according to claim 17, a mobile device according to claim 19, a method of converting radar measurements into radar information according to claim 23 and a mobile communication device according to claim 24.

### Background of the invention

Radar systems for maritime vessels are well-known within the art and have been used for centuries by almost every commercial ship.

So far, radar systems have been too expensive or too voluminous to gain widespread acceptance by smaller vessels and especially by yachts.

At the same time, conventional radar systems for smaller ships have limited functionality due to requirements of reduced size and price combined with limited possibilities of placing the radar antenna high enough into the air as the antenna position above sea level influences the range of the radar.

### Summary of the invention

The invention relates to a radar information transfer system according to claim 1 comprising
wireless transmission means (T), preferably also receiving means, for transmission of radar information (RI),
mobile receiving means (MR), preferably also mobile transmission means, for receipt of said radar information (RI),
central control means (CCM) for controlling transmission and receipt of radar information,
said radar information comprising compressed radar images established on the basis of radar measurements (RM) and a subsequent data compression.

The transfer of compressed images reduces the required transmission bandwidth, thus facilitating large-scale distribution of the desired information via commercially available telecommunication means.

The system offers an extremely high signal quality as e.g. land-based radar systems offer a very high signal resolution compared with commercially available maritime radars.

It should be noted that a system according to the invention deals with a large variety of subscribers; from professionals to amateurs, as the degree of information or update-rate to the subscribers may be adapted to each user profile or groupings of profiles. Even large ships and in particular fast moving ships, may obtain radar pictures with a very high resolution and range.

When, as stated in claim 2, said radar information is converted into parameterized objects (21, 22, 23, 24, 25) deduced on the basis of radar measurements (RM) and at least one of said objects comprise at least two object parameters (OP), and
said object parameters comprise an object position (OPOS) and object velocity (OVEL), a further advantageous embodiment of the invention has been obtained.

The establishment of parameterized objects facilitates distribution of radar information via analogue transmission channels which have traditionally been excluded from transmission of data signals due to a very low transmission bandwidth.

Moreover, the invention relates to a radar information transfer system as stated in claim 3 comprising
wireless transmission means (T), preferably also receiving means, for transmission of radar information (RI),
mobile receiving means (MR), preferably also mobile transmission means, for receipt of said radar information (RI),
central control means (CCM) for control of the transmission and receipt of radar information,
said radar information (RI; 11, 12, 13, 14, 15) comprising parameterized objects (21, 22, 23, 24, 25) deduced on the basis of radar measurements (RM) and at least one of said objects comprising at least two object parameters (OP),
said object parameters comprising an object position (OPOS) and object velocity (OVEL).

The establishment of parameterized objects facilitates distribution of radar information via already established analogue transmission channels which have traditionally been excluded from transmission of data signals due to a very low transmission bandwidth.

Radar information according to the invention may be obtained by means of e.g. ground-based radar stations or satellite-based radar stations.

Evidently, radar information may be obtained by means of radar systems supplemented by information obtained by e.g. AIS, an automatic identification system, thus obtaining further possibilities of easy calibration.

According to the invention, object velocity is broadly determined by a combination of speed and direction. Such information may e.g. be represented by means of an array or coordinates represented by a combination of angle and speed. Evidently, numerous formats are applicable within the scope of the invention.

When, as stated in claim 4, the system comprises display means (DM) for displaying said radar information (RI) received by said mobile receiving means (MR), a further advantageous embodiment of the invention has been obtained.

Due to the extremely simple nature of the transmitted radar information signals, the complexity at the mobile receiving end may be reduced significantly, as monitoring at the receiving end requires less signal processing. When dealing with specialized transportable devices, the manufacturing costs may be reduced.

When, as stated in claim 5, said radar information comprises radar tracks, a further advantageous embodiment of the invention has been obtained.

Radar information signals in the form of radar tracks may be established with only a small amount of data associated with each object. Moreover, the nature of the tracks offers an extremely high compression factor to be obtained once a radar image is established due to the fact that the image only requires data for establishment of the currently present objects.

When, as stated in claim 6, said parameterized objects are only transmitted in full if at least one of the object parameters has changed more than is allowed by a predetermined object weighting parameter (OWP), a further advantageous embodiment of the invention has been obtained.

Accordingly, the transmission bandwidth may be reduced further in an advantageous manner, as the omitted tracks may be interpolated by means of very simple signal processing at the mobile receiving end.

According to an embodiment of the invention, the subscriber may choose the weighting parameter and thereby the desired resolution quality.

When, as stated in claim 7, said radar information is transferred at intervals in bursts, a further advantageous embodiment of the invention has been obtained.

It should be noted that a typical subscriber of the system may be satisfied with relatively few display updates, as such a subscriber would typically be the owner of a relatively slow boat.

When, as stated in claim 8, said radar information is transferred upon request by the central control means (CCM), a further advantageous embodiment of the invention has been obtained.

When establishing a push transmission of the radar information to the individual subscribers, a very simple and cost-effective control of the system has been obtained. Accordingly, the subscribers may buy and obtain individual update rates and individual radar information characteristics occupying only a minimum of data transmission bandwidth.

The push distribution offers a further possibility of exploiting e.g. the new WAP technology advantageously, as the WAP protocol offers real-time transmission to subscribers.

When, as stated in claim 9, said radar information is transferred upon request by a mobile device, a further advantageous embodiment of the invention has been obtained.

A pull function may of course be combined with a push transfer of radar information in several different ways.

When, as stated in claim 10, said wireless transmission means (T) comprises a standard mobile telecommunication system such as WAP, UMTS, GSM or NMT, a further advantageous embodiment of the invention has been obtained.

Most standard mobile communication systems offer advantageous digital transmission of data, and such systems benefit from the fact that a large variety of accessories has been developed for interfacing with external hardware, such as mobile computers offering a high degree of user-friendliness and signal processing.

When, as stated in claim 11, said wireless transmission means (T) comprises VHF radio transmission means, a further advantageous embodiment of the invention has been obtained.

Traditional VHF-radio equipment offers the possibility of data transfer via a traditional 25 kHz acoustic modem.

It should be noted that a VHF radio is typically compulsory on a traditional marine vessel of a certain size and that the offered bandwidth in such a vessel is consequently significantly limited.

However, the invention provides the possibility of transferring radar information representing very large amounts of "knowledge" within a narrow bandwidth.

When, as stated in claim 12, said wireless transmission means (T) comprises satellite transmission means, a further advantageous embodiment of the invention has been obtained.

The use of wireless transmission means is particularly advantageous when a GPS signal is established at the mobile device for wireless transmission to the control means in order to obtain specific radar pictures in an area around the position of the mobile subscriber.

When, as stated in claim 13, the system comprises means for establishment of billing records (BR), said billing records comprising a measurement of the transfer of said radar information to individual mobile receiving means (MR), a further advantageous embodiment of the invention has been obtained.

The establishment of billing records offer the possibility of individual charging of the subscribers of the mobile receiving means according to the radar information consumption of the individual subscriber.

Evidently, several different billing methods may be implemented within the scope of the invention.

It is to be noted that the measurement of the transfer of radar information may even comprise parameters determining a subscription period during which the billing will be independent of the traffic. An example of such measurement would typically be a subscription determining that a subscriber may be billed a certain amount and then receive the desired radar information without further billing within a certain period.

When, as stated in claim 14, said measurement is obtained on the basis of the amount of transmitted data to a subscriber, a further advantageous embodiment of the invention has been obtained.

When, as stated in claim 15, said measurement is obtained on the basis of time during which radar information data is transmitted to the subscriber, a further advantageous embodiment of the invention has been obtained.

It should be noted that many billing philosophies may be established such as combinations of the above-mentioned or several other weighting parameters, such as the time of day, type of subscriber etc.

When, as stated in claim 16, the central control means (CCM) are adapted for transmission of radar information to the individual or groupings of mobile subscribers (MS) on the basis of position coordinates received from the said mobile subscribers, a further advantageous embodiment of the invention has been obtained.

The transfer of position coordinates to the central control means facilitates a very specific transfer of radar pictures to the individual subscribers, as the transmitted radar information may be reduced to comprising the neighboring radar information only.

Moreover, according to claim 17, the invention relates to a method of transferring radar information (RI) to at least one mobile subscriber (MS) via wireless transmission means, said method comprising the steps of
- establishing a measurement of the transferred radar information (RI) to said mobile subscriber(s) and
- modifying at least one billing record dedicated to said mobile subscriber(s) (MS) on the basis of said measurement.

The method offers the possibility of establishing a commercially attractive data transfer between client and provider.

When, as stated in claim 18, said measurement is established as transmission time and/or the transmitted number of tracks, a further advantageous embodiment of the invention has been obtained.

The method offers the possibility of establishing an even more commercially attractive data transfer between client and provider.

Moreover, the invention relates to a mobile device (MD), as stated in claim 19, comprising display means (DM) for displaying radar information (RI) received by signal input means (SIM) of said device,
said mobile device (MD) comprising signal output means (SOM),
said mobile device comprising an interface to position determining means (PDM), preferably a GPS, and
said device comprising means for outputting position indicating signals (PS) obtained or derived by said position determining means (PDM) to said outputting means (SOM).

Mobile devices according to present embodiment of the invention may easily be connected and interfaced with commercially available mobile phones and position determining means, such as a GPS.

When, as stated in claim 20, the device comprises signal processing means (SPM) adapted for calculation of radar information estimates (RIE) of the individual parameterized objects, said radar information estimates (RIE) representing the expected value of the parameterized objects wholly or partly if no new radar information (RI) of a particular object is received by the signal input means, a further advantageous embodiment of the invention has been obtained.

The required bandwidth for transmission of radar data may be reduced significantly by relatively simple signal processing in the mobile device, as interpolation of object positions on the display of the mobile device may be performed while occupying little signal processing resources.

When, as stated in claim 21, said device comprises a user interface (UI) enabling an operator to determine the range within which parameterized objects are to be displayed, a further advantageous embodiment of the invention has been obtained.

An operator of the mobile device may determine the desired range by simple local filtering of objects which are not within the desired range. Another possibility within the scope of the invention is that the mobile device communicates the desired range directly or indirectly to the central control means in order to establish a transmission of parameterized objects being within the desired range, thus avoiding unnecessary transmission of objects not being displayed.

When, as stated in claim 22, said position determining means (PDM) comprises a keyboard for manual input of position coordinates, a further advantageous embodiment of the invention has been obtained.

When offering the possibility of manual input position coordinates to the mobile device, which may subsequently be transmitted to the central control means, the hardware requirement necessary to run the system may be reduced significantly.

Moreover, the invention relates to a method, according to claim 23, of converting radar measurements into radar information, said radar information (RI) comprising parameterized objects (21, 22, 23, 24, 25) deduced on the basis of radar measurements (RM) and at least one of said objects comprising at least two object parameters (OP),
said object parameters comprising an object position (OPOS) and object velocity (OVEL), a further advantageous embodiment of the invention has been obtained.

According to the invention, object velocity determines both direction and speed of an object.

Moreover, when the invention relates to a mobile communication device according to claim 24 comprising position determining means, preferably at least one GPS, a further advantageous embodiment of the invention has been obtained.

The incorporation of position determining means, such as a GPS, in the mobile device provides a compact and robust device. In this respect, it should be noted that a maritime utilization of such a device typically involves humidity and wind.

A further important aspect of the invention is that GPS may be applicable for billing purposes by the operator of the telecommunication network, and even more important, for rescue purposes. The position of a mobile maritime subscriber may thus be monitored by the central control means and offer the necessary information without any delay in relation to e.g. rescue operations.

When, as stated in claim 25, the mobile device comprises a WAP mobile phone or a satellite phone, a further advantageous embodiment of the invention has been obtained.

When incorporating a GPS into a mobile device, such as a WAP phone, a high display quality has been obtained.

When, as stated in claim 26, the radar information (RI) is provided to the mobile receiver(s) (MR) on the basis of at least one zone determining parameter, a further advantageous embodiment of the invention has been obtained.

It is to be noted that the determining parameter may be established in several different ways within the scope of the invention. Examples of such zone determining parameters would e.g. be a macro zone previously chosen by a mobile subscriber and directly related to the subscription of the radar delivery service or a choice made on the fly and transmitted wirelessly to the central control means. Such a macro zone may e.g. be used to divide the total area, such as the entire coast area of a country to be serviced , into "smaller" zones which may be chosen by the user. If such a macro zone has been chosen, radar information contained within that zone will be transmitted to the subscriber.

Another kind of zone determining parameter may be the position of the subscriber (mobile receiver) transmitted to the central control means. The area of the of radar information would then be determined more or less automatically by the central control means in order to provide the desired radar information to the subscriber.

An example of such an application would for a mobile subscriber to transmit a request to the central control means to update a subscriber profile so as to provide radar information to the subscriber within a certain range from the position of the subscriber. Such a request would typically be transmitted to the central control means at low intervals while the transmission of position data to the central control means would be transmitted at a higher rate.

Obviously, the manner in which zone determining parameters are established may be carried out in several different ways within the scope of the invention.

The important point with respect to the above embodiment of the invention is that radar information is transmitted to a specific mobile receiver or group of mobile receivers on the basis of zone determining parameters.

The resulting zone determining parameters would typically determine a geographical area and the radar information to be transmitted to the subscriber should be within that area.

When, as stated in claim 27, at least one of the said zone determining parameters comprises position data transmitted from the mobile receiving means (MR), a further advantageous embodiment of the invention has been obtained.

According to the present embodiment of the invention, more relevant radar information may be supplied to the subscriber due to the fact that the overall present radar information is truncated to comprise only the most relevant data for the user in question.

### The drawings

The invention will be described below with reference to the drawings where
- figs. 1 and 2: illustrate the principle components of traditional radar monitoring and the conversion into parameterized information,
- fig. 3: illustrates a map according to the invention on which other ships are shown by their radar tracks,
- Figs. 4a - 4b: illustrate a radar information transfer according to an embodiment of the invention
- Fig. 5: illustrates a further embodiment of the invention,
- Fig. 6: illustrates a further embodiment of the invention, and
- Fig. 7: illustrates a further embodiment of the invention.

### Detailed description

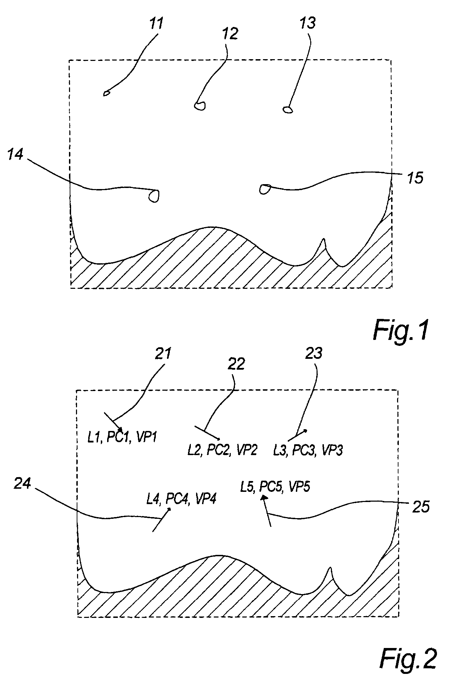

Referring to fig. 1, the principle components of radar measurement have been illustrated. According to the illustration, measurements have been converted into a substantially true image on the basis of such measurements which means that a measured reflection is transformed into a true picture of what might actually have inferred the measured reflections.

Thus, fig. 1 shows a number of dots or dot contours 11, 12, 13, 14 and 15, all representing remote, detected substances. The dots are displayed on a map-like display 10.

Turning now to fig. 2, the above-mentioned dots have been transformed into parameterized objects 21, 22, 23, 24 and 25, still representing the above-mentioned detected substances. The objects are displayed on a map-like display 20 in the form of a so-called track.

Each track comprises a label, L, which has been assigned to a specific object. The label may e.g. be the name of a ship moving with the object on the display 20 in such a way that easy and quick identification of an object may be made by an operator.

Moreover, each track comprises a set of position coordinates, PC, indicating the position of the object.

Moreover, each track comprises a velocity parameter, VP, indicating the velocity of the respective object. It should be noted that the velocity of said system indicates both speed and travel direction.

Also, it should be noted that many other types and combinations of track components are applicable within the scope of the invention.

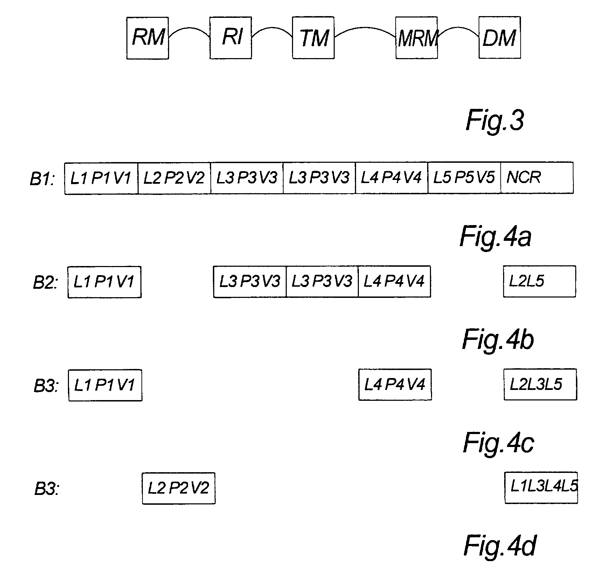

Fig. 3 illustrates the principles of the signal flow from the radar station to a mobile device according to the invention.

A radar station measures and transforms a series of radar reflections into "dot-based" position detections, radar measurements RM. The RM signals are subsequently transformed into parameterized representations of objects, so-called radar tracks, RI. The tracks will usually represent a very compressed version of the radar measurement, insofar only identified objects, e.g. ships, are represented. Superfluous information showing empty areas on the radar image may thus be avoided due to the fact that the tracks only represent e.g. ships which are actually present.

The radar information RM will subsequently be transferred to a wireless radio transmitter TM which, in turn, transmits the radar information to a mobile radar receiver MRM. The received radar information may finally be monitored on a display DM.

The radar measurement may typically be obtained by means of a land-based high resolution radar.

The wireless transmission means may e.g. imply satellite transmission via e.g. a low orbit satellite. Moreover, it may imply a traditional VHF system.

Evidently, the illustrated flow may be supplemented by further signal processing and signal flows. The radar information RI to be transmitted wirelessly to the mobile receiver MRM should naturally be converted into a signal format suitable for radio transmission. Nevertheless, it is naturally still a representation of the radar information.

Moreover, the signal flow may preferably be supplemented by a return path to the mobile receiver MRM extending all the way back to the control means (not shown) controlling the operation, so as to provide the possibility of transmitting the position of the individually addressed mobile devices back to the control means. This return path may facilitate a very advantageous embodiment of the invention, i.e. transferring only radar information within a certain area or at a certain range from the mobile device.

It should be noted that the pre-processing of a radar measurement into a parameterized object facilitates a significant reduction of the necessary transmission capacity. As a matter of fact, even standard naval VHF radio equipment offers the necessary signal bandwidth.

Figs. 4a - 4b illustrate a radar information transfer according to an embodiment of the invention. Evidently, many other signal formats are applicable within the scope of the invention.

The illustrations represent a state of the system in which five ships are located within a certain range from the mobile device. The operator of the mobile device may communicate at a certain range from the central control means (not shown) or the range may be predetermined.

The illustrated bursts may e.g. be transmitted every three minutes or whenever appropriate in relation to the current application.

The transmission of bursts may e.g. be established upon request by the operator, but it may also be initiated upon request by the central control means.

Fig. 4a illustrates the first burst of a burst transmission of four bursts.

The burst comprises five track frames, labeled L1, L2, L3, L4 and L5. The last frame NCR comprises positive information identifying tracks not transmitted due to the fact that no major changes in the track parameter, e.g. the velocity (speed and direction), have occurred.

Fig. 4b illustrates the second burst of a burst transmission of four bursts.
Now, only three tracks, L1, L3 and L4 have been transmitted due to the fact that no significant change of track L2 has occurred. The last frame NCR makes a positive identification to the receiver stating that L2 has not been omitted by mistake, but is simply unchanged or substantially unchanged.

Signal processing means in the mobile device may thus easily calculate a new track estimate of L2 representing a true, or almost true, position and velocity of the object.

Fig. 4c illustrates the third burst of a burst transmission of four bursts.

The third burst comprises the frames L1, L4 and, of course, NCR determining that the velocity of L2, L3 and L5 is actually unchanged.

Now, both tracks L2, L3 and L5 may be estimated locally by the mobile device.

Fig. 4d illustrates the last burst of a burst transmission of four bursts.
Now, only one track has been transmitted, and four tracks L1, L3, L4 and L5 may be estimated locally by the mobile device.

It appears that the required data transmission means may be minimized further when certain conditions are met with respect to moving the involved objects.

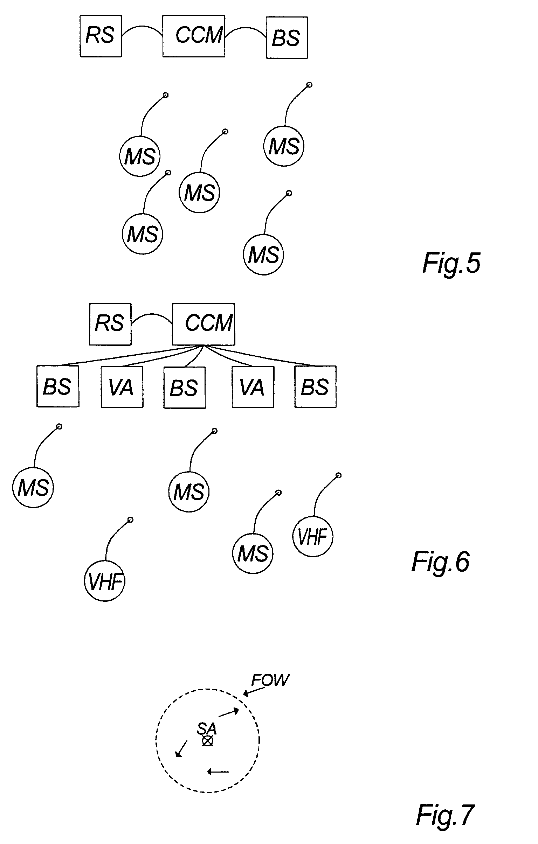

Fig. 5 illustrates a further embodiment of the invention in which a radar station RS is connected to a base station of e.g. a GSM system via a central control CCM. The central control CCM distributes radar information to a number of mobile subscribers MS.

The transmission of radar information to the mobile subscribers may be individually initiated upon request by the mobile subscriber or the central control CCM.

Each mobile subscriber comprises or is connected to a display which may display the received radar information.

Fig. 6 illustrates a further embodiment of the invention in which a radar station is connected to a plurality of base stations and VHF radio stations.

The central control means CCM may preferably imply communication with the subscribers via the internet.

Subscribers are thus able to obtain the necessary radar information by means of different kinds of wireless transmission means. Evidently, other kinds of wireless systems, such as satellite systems, may be applied.

It should be noted that the system, when dealing with narrow band wireless communication, is quite advantageous due to the fact that radar measurements have been converted into very few parameters. For instance, VHF offers only 2400 baud.

Hence, one track may typically occupy only four bytes depending on the current application, of course.

Fig. 7 illustrates a further embodiment of the invention according to which a subscriber receives radar information within a certain range from his position SP.

The central control unit may transmit a warning to the individual subscribers if an object FOW, e.g. a fast moving ship, is moving outside the predetermined range but heading towards the predetermined range.

Moreover, client software in the mobile device may calculate collision risks based upon the track parameters and its own position and velocity.

According to the invention, it is possible to obtain an advantageous combination of transferring high definition radar measurement while also occupying a very low transmission bandwidth. Accordingly, standard naval VHF radio equipment may be applied for the transmission of radar information.

The position determining means may be incorporated in the housing of the device, or it may be suitably connected to a standard GPS via an interface such as a cable.

A mobile device according some preferred embodiments of the invention may comprise a standard telecommunication device such as a GSM, a WAP, a satellite telephone or a GPS. The mobile device comprises means for receiving radar information and means for displaying a radar image representation to the user of the device. Moreover, such a device may comprise means for transmitting the position of the mobile device obtained by the GPS as a data stream via the telecommunication protocol of the device to central control means. Accordingly, the central control means may transmit dedicated radar information to the device within a certain area or within a certain range from the device.

Moreover, such a device preferably comprises a suitable keyboard enabling the user of the device to transfer certain requests to the central control means in such a way that different services may be carried out in an easy way.

The transfer of data between the mobile device and the central control means will typically be effected via standard data communication protocols between the antenna of the mobile device and e.g. a network base station and a dedicated communication link between the central control means and the base station.

It should be noted that a central control means according to the invention may comprise a plurality of control stations each communicating with at least one radar station.

## Claims

1. Radar information transfer system comprising
wireless transmission means (TM), preferably also receiving means, for transmission of radar information (RI),
mobile receiving means (MRM), preferably also mobile transmission means, for receipt of the said radar information (RI),
central control means (CCM) for controlling the transmission and receipt of radar information,
said radar information comprising compressed radar images established on the basis of radar measurements (RM) and subsequent data compression.

2. Radar information transfer system according to claim 1, wherein said radar information is converted into parameterized objects (21, 22, 23, 24, 25) deduced on the basis of radar measurements (RM) and at least one of said objects comprising at least two object parameters ,
said object parameters comprising an object position (PC) and object velocity (V).

3. Radar information transfer system comprising
wireless transmission means (TM), preferably also receiving means, for transmission of radar information (RI),
mobile receiving means (MRM), preferably also mobile transmission means, for receipt of said radar information (RI),
central control means (CCM) for controlling transmission and receipt of radar information,
said radar information (RI; 11, 12, 13, 14, 15) comprising parameterized objects (21, 22, 23, 24, 25) deduced on the basis of radar measurements (RM) and at least one of said objects comprising at least two object parameters ,
said object parameters comprising an object position (PC) and object velocity (V).

4. Radar information transfer system according to claims 1-3, wherein said system comprises display means (DM) for displaying said radar information (RI) received by said mobile receiving means (MRM).

5. Radar information transfer system according to claims 1-4, wherein said radar information comprises radar tracks.

6. Radar information transfer system according to claims 1-5, wherein said parameterized objects are only transmitted in full if at least one of the object parameters has changed more than what is allowed by a predetermined object weighing parameter.

7. Radar information transfer system according to claims 1-6, wherein said radar information is transferred at intervals in bursts.

8. Radar information transfer system according to claims 1-7, wherein said radar information is transferred upon request by the central control means (CCM).

9. Radar information transfer system according to claims 1-8, wherein said radar information is transferred upon request by a mobile device.

10. Radar information transfer system according to claims 1-9, wherein said wireless transmission means (TM) comprises a standard mobile telecommunication system such as WAP, UMTS, GSM or NMT.

11. Radar information transfer system according to claims 1-10, wherein said wireless transmission means (TM) comprises VHF radio transmission means.

12. Radar information transfer system according to claims 1-11, wherein said wireless transmission means (T) comprises satellite transmission means.

13. Radar information transfer system according to claims 1-12, wherein the system comprises means for establishing billing records, said billing records comprising a measurement of the transfer of said radar information to individual mobile receiving means (MRM).

14. Radar information transfer system according to claim 13, wherein said measurement is obtained on the basis of the amount of transmitted data to a subscriber.

15. Radar information transfer system according to claim 13 or 14, wherein said measurement is obtained on the basis of time during which the radar information data is transmitted to the subscriber.

16. Radar information transfer system according to claims 1-15, wherein the central control means (CCM) is adapted for transmission of radar information to an individual or a group of mobile subscribers (MS) on the basis of position coordinates received from the said mobile subscribers.

17. Method of transferring radar information (RI) to at least one mobile subscriber (MS) via wireless transmission means, said method comprising the steps of
establishing a measurement of the transferred radar information (RI) to said mobile subscriber(s) and
modifying at least one billing record dedicated to the said mobile subscriber(s) (MS) on the basis of said measurement.

18. Method of transferring radar information according to claim 17, whereby said measurement is established as transmission time and/or the transmitted number of tracks.

19. Mobile device comprising display means (DM) for displaying radar information (RI) received by signal input means of said device,
said mobile device (MD) comprising signal output means,
said mobile device comprising an interface to position determining means, preferably a GPS, and
said device comprising means for outputting position indicating signals obtained or derived by said position determining means to said outputting means.

20. Mobile device according to claim 19, wherein the device comprises signal processing means adapted for calculation of radar information estimates (RIE) of the individual parameterized objects, said radar information estimates representing the expected value of the parameterized objects wholly or partly if no new radar information (RI) of a particular object is received by the signal input means.

21. Mobile device according to claims 19-20, wherein said device comprises a user interface enabling an operator to determine the range within which parameterized objects are to be displayed.

22. Mobile device according to claims 19-21, wherein said position determining means comprises a keyboard for manual input of position coordinates.

23. Method of converting radar measurements into radar information, said radar information (RI) comprising parameterized objects (21, 22, 23, 24, 25) deduced on the basis of radar measurements (RM) and at least one of said objects comprising at least two object parameters (OP),
said object parameters comprising an object position (OPOS) and object velocity (OVEL).

24. Mobile communication device comprising position determining means, preferably at least one GPS.

25. Mobile communication device according to claim 24, wherein the mobile device comprises a WAP mobile phone or a satellite phone.

26. Radar information transfer system according to claims 1-16, wherein said radar information (RI) is provided to the mobile receiver(s) on the basis of at least one zone determining parameter.

27. Radar information transfer system according to claim 26, wherein at least one of said zone determining parameters comprises position data transmitted from the mobile receiving means (MRM).
